# EUROPÄISCHE PATENTANMELDUNG

(11) **EP 0 653 510 A2**
(43) Veröffentlichungstag der Anmeldung: **17.05.1995**
(21) Anmeldenummer: 94117138.1
(22) Anmeldetag: 29.10.1994
(51) Int. Cl.: D21B 1/32

(54) **Verfahren zur Aufbereitung von bedrucktem Altpapier**

(30) Priorität: 11.11.1993 DE 4338502
(71) Anmelder: J.M. Voith GmbH, D-89522 Heidenheim (DE)
(72) Erfinder: Bruckner, Josef, D-89522 Heidenheim (DE); Keck, Wilfried, D-89518 Heidenheim (DE)
(74) Vertreter: Weitzel, Wolfgang, Dr.-Ing. Patentanwalt

(57) **Zusammenfassung**

Die Erfindung betrifft ein Verfahren zum Aufbereiten, insbesondere Reinigen nach dem Auflösen von Altpapier mit Vorreinigung oder Vorsortierung sowie zumindest Dispergierung eines Teils des Altpapiers sowie Flotation oder Wäsche desselben.

Die Erfindung ist gekennzeichnet durch unmittelbar nach der Grobreinigung/Vorsortierung in einem Siebkorb-Druck-Feinsortierer mit einer Schlitzweite des Siebkorbes von höchstens 0,15 mm bewirkte Bereitstellung eines hinsichtlich Feinsortierung endgültig gereinigten Stoffs als Durchlauf des Drucksortierers und Weiterführung des stark verunreinigten Überlaufanteils des Drucksortierers mindestens zu einer Entwässerungsstufe nachgeschalteten Dispergierstufe und nachfolgende Flotation und/oder Waschstufe.

## Beschreibung

Die Erfindung betrifft ein Verfahren zur Aufbereitung von bedrucktem Altpapier entsprechend dem Oberbegriff des Patentanspruchs 1. Insbesondere für den Einsatz von graphischen Papieren und/oder Hygienepapieren sind Einrichtungen zur Druckfarbenentfernung, wie z.B. Flotation und/oder Wäsche und zur Dispergierung erforderlich. Diese Einrichtungen wurden bisher im Vollstrom geschaltet, d.h. die gesamte Altpapiermenge wurde in diesen Einrichtungen bearbeitet. Dieses Vorgehen erfordert hohe Investitions-, Betriebs- und Wartungskosten, wobei die Betriebskosten elektrische Energie oder Dampf sein können.

Die Aufgabe der Erfindung ist es, diese Kosten zu senken. Diese Aufgabe wird erfindungsgemäß durch die Merkmale des kennzeichnenden Teils des Patentanspruchs 1 gelöst. Die Erfindung beruht praktisch darauf, daß mit dem Feinsiebkorb-Drucksortierer eine Aufteilung des Altpapierstromes in zwei Ströme A und B erfolgt, die jeweils getrennt weiter aufbereitet werden. Dabei ist es insbesondere so, daß bei entsprechender Siebschlitzfeinheit des Siebkorbes der Durchlauf des Drucksortierers einen relativ reinen Stoff ergibt, der je nach Ausgangsmaterial (sprich Qualität und Reinheit des bedruckten Altpapiers) als Fertigstoff verwendet werden kann, je nach den Anforderungen des Verwenders an das Endprodukt.

Die Dispergierung wird nur noch für den Überlaufanteil des Drucksortierers mit dem Siebkorb feinster Schlitzweite vorgenommen, so daß sich hier die Kosten erheblich senken lassen, sowohl hinsichtlich Investition als auch Betriebskosten. Es muß ja nur ein sehr viel kleineres Dispergiergerät, das normalerweise sehr teuer ist, angewendet werden. Man kann die beiden Stoffströme getrennt verwenden, man kann aber auch den Durchlaufanteil des Drucksortierers vor oder nach der Flotation oder Wäsche für den Überlaufanteil diesem wieder zugeben. Der Stoffstrom des Überlaufanteils kann natürlich auch eine Anpassung an die Anforderung erhalten, indem man z.B. eine Entaschung für diesen vorsieht. Dies empfiehlt sich ja vielfach gerade bei dem angestrebten Verwendungszweck für Hygiene- oder graphische Papiere.

Ferner ist es für die angestrebte Wirtschaftlichkeit auch günstig, dem Stofflöser eine weitgehende Auflösung des Altpapiers bis auf Stippenfreiheit oder weitestgehende Stippenfreiheit vorzunehmen. Dies kann durch höhere Auflösezeiten und/oder kleinen Temperaturen erfolgen.

Nachfolgend wird die Erfindung anhand der beigefügten Zeichnungen erläutert, welche beide Prinzipskizzen erfindungsgemäßer Verfahren skizzieren.

Im Stofflöser 1 kann kontinuierlich oder auf möglichst hohe Stippenfreiheit diskontinuierlich bei möglichst hoher Konsistenz, im letzteren Fall von etwa 16 %, aufgelöst werden. Dazu werden nötige Chemikalien entsprechend dem gestrichelten Pfeil ebenfalls zugegeben. Anschließend erfolgt eine Vorsortierung und/oder Grobreinigung z.B. in Siebsortiergeräten mit im allgemeinen einem ebenen Sieb und einem davor rotierenden Rotor, beispielsweise in Hydrozyklonen. Nach dieser Vorreinigung ist dann unmittelbar der Siebkorb-Druck-Feinsortierer 3 geschaltet, bei welchem man mit einem Überlaufanteil zwischen 30 und 70 %, vorzugsweise zwischen 40 und 60 % arbeitet. Der angewendete Siebkorb hat feine Schlitze, von höchstens 0,15 mm Schlitzweite. Anzustreben ist eine Schlitzweite von etwa 0,1 mm. Die Konstruktion dieses Siebkorbes muß natürlich möglichst verspinnungsfrei und verstopfungsfrei ausgebildet sein, da sonst größere Betriebsstörungen zu befürchten wären. Diese Technik ist aber heute an sich schon bekannt (siehe z.B. DE 37 38 746, DE 48 04 615 und DE 42 24 727).

Nachfolgend wird die Erfindung anhand der Figuren der beigefügten Zeichnung erläutert, welche Prinzipskizzen des Prozeßverlaufs diagrammatisch darstellen.

Es wird zunächst in einem Stofflöser 1 das Altpapier, das in diesem gemäß ausgezogenem Pfeil hineingegeben worden ist, mit Chemikalien entsprechend dem gestrichelten Pfeil aufgelöst. Es erfolgt nun eine Vorreinigung der erhaltenen Altpapiersuspension, wie es mit dem Kästchen 2 angedeutet ist, wobei es sich um Sortiergeräte, Zyklone (Konsistenz zwischen 1,6 und 3 %) und auch Flotationseinrichtungen oder Wascheinrichtungen handeln kann. Es können auch mehrere dieser Geräte verwendet werden. Dann erfolgt die Sortierung in dem Siebkorb-Druck-Feinsortierer 3, der mit einem Siebkorb mit feinsten Siebschlitzen ausgerüstet ist, welche eine Schlitzweite zwischen 0,8 und 1,5 mm aufweisen können bzw. sollten. Es ergeben sich danach zwei Stränge A und B, wobei in dem Strang B zunächst der größte oder erhebliche Verschmutzungsanteil enthalten ist. Im Zuge des Stranges B ist dann eine Entwässerungsstufe 4 vorgesehen, der eine Dispergierstufe 5 nachgeschaltet ist, wobei vorzugsweise Scheibendispergiermaschinen in Frage kommen. Anschließend wird eine Flotation 6 oder eine entsprechende Wäsche eingeschaltet. Vor der Entwässerungsstufe kann aber auch noch eine Reinigungsstufe und/oder Sortierstufe 9 vorgesehen sein. Für diese Geräte kommen auch vorzugsweise Siebsortiergeräte und/oder Hydrozyklone in Frage, wobei die Hydrozyklone vielfach in sogenannter Kaskadenschaltung angeordnet sind. Dies ist aus dem Stand der Technik weitgehend bekannt. Im Strang A liegt relativ reine Fasersuspension vor, die je nach Anforderungen hinsichtlich Qualität des Fertigstoffes und/oder Reinheit für sich zu einem Endprodukt verarbeitet werden oder über Leitungen 10 bzw. 12 dem Strange B zugegeben werden kann. Diese Frage ist auch auf der Basis zu entscheiden, welches Ausgangsmaterial vorliegt und welchen Verschmutzungsgrad insbesondere diese hat. Im Strang A kann auch noch für bestimmte Anwendungszwecke, insbesondere für Hygienepapiere oder graphische Papiere eine Entaschungstufe 8 vorgesehen sein. Die Konsistenz in dem Aufbereitsstrang, insbesondere im Sortiergerät 3, liegt vorzugsweise bei 1 %, d.h. auch möglicherweise in einem Bereich zwischen 0,7/0,8 % und 1,2 %. Der Überlaufanteil in dem Sortiergerät 3 ist relativ groß zu wählen zwischen 30 und 70 %, vorzugsweise zwischen 40 und 60 %. Dadurch erhöht man die Reinheit in dem Strang A. Man hat insgesamt dann den großen Vorteil, daß die Dispergiermaschine 5 relativ klein zur Verarbeitung der reduzierten Stoffmenge ausgebildet werden kann. Auch der Energieaufwand wird dadurch ganz erheblich verringert, ganz besonders wegen dieser kleineren Dispergiermaschine. Eine zusätzliche Flotations- oder Waschstufe 24 kann vor die Fraktionierstufe eingeschaltet werden.

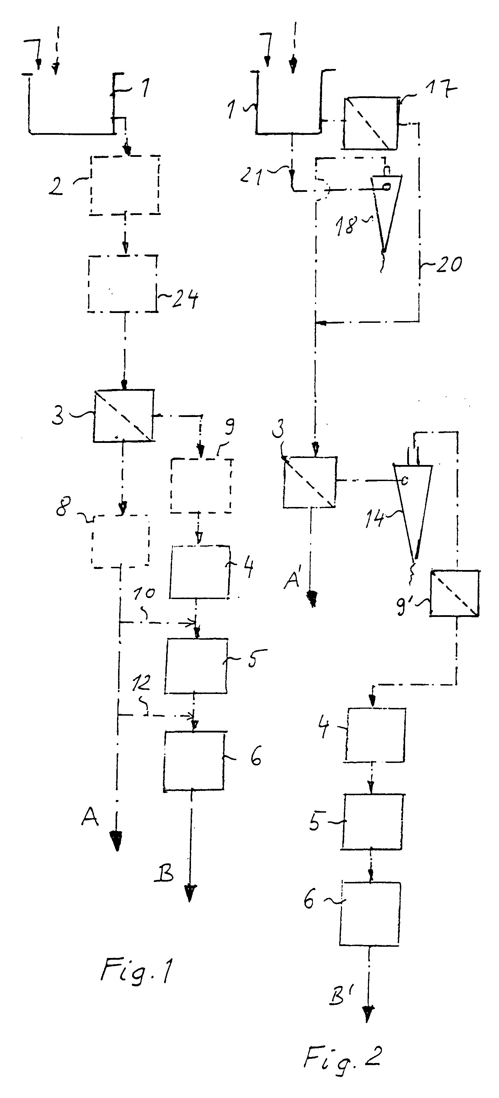

In Figur 2 ist ein sehr ähnliches Schema angedeutet, wobei die gleichen Bezugszeichen die gleichen Maschinen und Apparate bezeichnen. Hierin ist die Stufe 2 der Figur 1 etwas näher beschrieben und besteht hier aus einem Wirbelstrom-Siebgerät 17, das dem Stofflöser für einen erheblichen Schmutzanteil aufweisenden Stoffstrom und einem Hydrozyklon, der dem Stofflöser für den restlichen Stoffstrom nachgeschaltet ist. Die Leitung 20 kann auch in die Leitung 21 münden, die zu dem Hydrozyklon 18 führt. Das Gerät 17 bewirkt praktisch eine Entsorgung des Stofflösers während seiner Betriebszeiten oder auch in Betriebspausen. Die Stufe 9 der Figur 1 ist ebenfalls hier aufgeteilt in eine Siebsortierstufe 9' und eine vorgeschaltete Hydrozyklonstufe 14, wobei auch hier eine Kaskadenschaltung in Frage kommt. Die beiden Stränge sind hier mit A' und B' gekennzeichnet. Es ist natürlich so, daß auch durch die Entwässerungsstufe 4 eine gewisse Reinigung des Stoffes erfolgt, da hier im allgemeinen Siebmaschinen eingesetzt werden. Es kann daher eventuell auf die Reinigungsstufe 14 oder Sortierstufe 9, 9' verzichtet werden.

Die Entwässerungsstufe 4 entwässert zum Zwecke der Dispergierung auf eine Konsistenz von etwa 25 - 35 %. Das erhaltene Eindickerfiltrat kann nach Reinigung z.B. auch wieder für die Verdünnung vor der Flotationsstufe oder für die entsprechende Wäsche eingesetzt werden. Diese Zwischenreinigung des Eindickerfiltrats muß nicht stattfinden, ist aber zu empfehlen.

Im allgemeinen ist weiterhin eine hier nicht dargestellte Bütte nach dem Stofflöser 1 geschaltet, in welchem die benötigte Konsistenz für die Siebsortierung eingestellt wird, weil ja im Stofflöser im allgemeinen bei viel höherer Konsistenz aufgelöst wird, wobei diese ja bekanntlich zwischen 8 und 15 % beträgt. Wie erwähnt, sollte im Stofflöser relativ weitgehend und stippenfrei aufgelöst werden, was durch entsprechende Chemikalien und Temperaturen (z.B. zwischen 40° oder 80° und 120°) erreicht werden kann, um nicht zu lange Auflösezeiten zu haben. Bei höheren Temperaturen als 100°C muß natürlich der Stofflöser beim Auflösevorgang geschlossen sein und unter überatmosphärischem Druck stehen. Dann ist natürlich anstelle der Bütte dem Stofflöser ein Abblastank nachzuschalten.

Die Dispergiergeräte werden ja prinzipiell wie Einscheiben- oder Zweischeibenmahlgeräte ausgebildet, wobei die Mahlscheiben (für Stator oder Rotor) hinsichtlich ihrer Garnitur entsprechend angepaßt sind, wofür für die Dispergiermaschine die DE 42 10 207 ein Beispiel ist. Hydrozyklone und Eindickmaschinen (Entwässerungsmaschinen) sind in den verschiedensten Ausbildungen auf dem Markt erhältlich. Eine geeignete Entwässerungsmaschine ist z.B. bekannt aus der DE 39 26 440.

## Patentansprüche

1. Verfahren zum Aufbereiten, insbesondere Reinigen nach dem Auflösen von Altpapier mit Vorreinigung oder Vorsortierung sowie zumindest Dispergierung eines Teils des Altpapiers sowie Flotation oder Wäsche desselben, gekennzeichnet durch unmittelbar nach der Grobreinigung/Vorsortierung in einem Siebkorb-Druck-Feinsortierer (3) mit einer Schlitzweite des Siebkorbes von höchstens 0,15 mm bewirkte Bereitstellung eines hinsichtlich Feinsortierung endgültig gereinigten Stoffs als Durchlauf des Drucksortierers (3) und Weiterführung des stark verunreinigten Überlaufanteils des Drucksortierers (3) mindestens zu einer einer Entwässerungsstufe (4) nachgeschalteten Dispergierstufe (5) und nachfolgende Flotation und/oder Waschstufe (6).

2. Verfahren nach Anspruch 1, dadurch gekennzeichnet, daß der Durchlaufanteil des Drucksortierers (3) dem Überlaufanteil vor oder nach dessen Flotation oder Wäsche beigegeben wird.

3. Verfahren nach Anspruch 1 oder 2, dadurch gekennzeichnet, daß im Stofflöser eine nahezu stippenfreie Auflösung des Altpapiers vorgenommen wird.

4. Verfahren nach Anspruch 2 oder 3, dadurch gekennzeichnet, daß der Durchlaufanteil vor Beimengung zu dem Überlaufanteil einer Entaschungsstufe (8) durchläuft.

5. Verfahren nach einem der Ansprüche 1-4, dadurch gekennzeichnet, daß eine - weitere - Flotationsstufe (24) vor dem Druck-Feinsortierer geschaltet ist.

6. Verfahren nach einem der Ansprüche 1-4, dadurch gekennzeichnet, daß eine - weitere - Waschstufe vor den Druck-Feinsortierer (3) geschaltet ist.

7. Verfahren nach einem der Ansprüche 1-6, dadurch gekennzeichnet, daß eine Feinreinigungs- und/oder Feinsortierstufe (9) vor die Entwässerungsstufe (4) geschaltet ist.
